# EUROPEAN PATENT SPECIFICATION

(11) **EP 3 968 765 B1**
(45) Date of publication and mention of the grant of the patent: **18.06.2025**
(21) Application number: 20805716.6
(22) Date of filing: 12.05.2020
(51) Int. Cl.: A01K 61/10, B65D 90/62, A01K 63/02, A01K 63/10, A01K 63/00

(54) **TANK PROVIDED WITH A HATCH AND METHOD FOR PROVIDING ACCESS TO THE TANK**
TANK MIT EINER LUKE UND VERFAHREN ZUR BEREITSTELLUNG EINES ZUGANGS ZUM TANK
RÉSERVOIR POURVU D'UNE TRAPPE ET PROCÉDÉ POUR DONNER ACCÈS AU RÉSERVOIR

(30) Priority: 16.05.2019 NO 20190616
(43) Date of publication of application: 23.03.2022
(73) Proprietor: Total Betong AS, 4344 Bryne (NO)
(72) Inventor: BANG-HAAGENSEN, Olav, 4340 Bryne (NO); ASKØ, Einar, 4333 Oltedal (NO); SEM, Ole Roger, 4056 Tananger (NO)
(74) Representative: Håmsø Patentbyrå AS
(86) International application number: PCT/NO2020/050120
(87) International publication number: WO 2020/231270

(56) References cited:
- EP-A1- 1 688 371
- WO-A1-2014/000102
- WO-A1-2017/091079
- WO-A1-2019/027332
- WO-A1-2019/035719
- US-A- 4 516 859

## Description

The invention relates to a tank for water. More particularly, the invention relates to a tank filled with water of such a size that the tank is suitable for rearing fish. The water may be fresh water or sea water. The invention also relates to providing the tank with a hatch opening and an associated hatch in a lower portion of the wall of the tank. The hatch opening is so large that personnel can comfortably climb into the tank through the hatch opening. The hatch is formed in such a way that the fish in the tank will not get injured by the hatch.

Rearing fish may take place in so-called land-based facilities. Some species of fish, such as salmonoids, hatch in fresh water and are reared in fresh water until they are ready for stocking into sea water as so-called smolts. It has turned out to be advantageous to stock large smolts. This involves the salmonoid being reared in large vessels before stocking because the smolts constitute a considerable biomass.

A vessel that is suitable for rearing large smolts may consist of a tank made of concrete or a tank made of fibreglass. It is advantageous for the tank to have a relatively large depth as the water volume may be increased without the so-called footprint of the tank being larger. The walls of the tank may be between five and ten metres high, for example.

It is an advantage for tanks like that to have a smooth inside. Fish in tanks like that may become damaged if they bump into protruding elements on the inside of the tank.

Tanks like that are large, and it is advantageous to build these on site. After the tank itself has been built, for example by casting, there is a need to do work inside the tank. Such work may be, for example, arranging water supply and water drainage. Access to the inside of the tank may be arranged with a stair tower which is built as a scaffold. This is not always possible as the stair tower or the scaffold may be an obstacle to other work that is to be carried out inside the tank. The alternative is using ladders. Erecting a stair tower inside the tank is extensive work, and it requires transporting and lifting or lowering equipment and elements. In the construction period, there is therefore a risk of harm to the staff, in the form of both fall injuries and injuries owing to falling objects.

It is difficult to evacuate an injured person from the inside of a tank of that kind, as the person will have to be carried up a ladder or a stair tower. An injury of that kind may for example be due to bone fracture, head injury or burns.

During normal operation, and after the tank has been emptied of fish, there may be a need for maintenance work to be carried out inside the tank. Such maintenance work may be checking the water inlet and the water outlet and cleaning the wall and bottom of the tank. Personnel going to perform such work enter the tank by positioning a ladder on the inside of the tank. Entering happens from the top. The height from the upper edge of the tank to the bottom of the tank may, as described, be five metres or more. The ladder cannot stand permanently on the inside of the wall of the tank, as the ladder will constitute a protruding element by which the fish may get damaged. Positioning the ladder, and also entering the tank, constitute a safety risk to the personnel.

During normal operation, oxygen may be added to the water in the tank to ensure that the fish gets enough oxygen. The tank may therefore be provided with an oxygen supply of its own. Maintenance work may comprise hot work within the tank, like welding. If, by mistake, the oxygen supply has not been shut off, oxygen will accumulate at the bottom of the tank as oxygen is heavier than air. This may increase the risk of fire inside the tank by hot work.

Patent document EP1688371A1 discloses a manhole cover with a locking system for opening and shutting the cover as well as a sealing around the outer perimeter area of the covers base body or around the inner edge of the tank opening, and which has a seal ring to enable a clean and resistance-free cleaning of the cover. The base body is built as a bevelled shape with a conical outer perimeter area, whilst the seal ring is located in a groove in the outer perimeter area or in a groove of the conical inner edge, with the outer perimeter area of the inner edge lying in a stop around the cover. The stop may have a projection either on the outer perimeter area or the inner edge of the tank opening. The stop may have a cross-section that is corrugated, rectangular, trapezoid or semi-trapezoid.

The invention has for its object to remedy or reduce at least one of the drawbacks of the prior art or at least provide a useful alternative to the prior art.

The object is achieved through the features that are specified in the description below and in the claims that follow.

The invention is defined by the independent claims. The dependent claims define advantageous embodiments of the invention.

By the lower portion of the wall is meant the part of the wall that extends from the bottom of the tank and as high up as to where it is possible for personnel to climb through the hatch opening without using a ladder or some corresponding implement on the outside of the tank and on the inside of the tank.

In a first aspect, the invention relates to a tank for rearing fish, said tank having a bottom and a surrounding wall with an inside and an outside. A lower portion of the surrounding wall is provided with a hatch casing positioned in a hatch opening extending through the surrounding wall for access for personnel from the outside to the inside of the tank. A hatch with an inside facing the water in the tank and an outside closes the hatch opening in a liquid-tight manner when the hatch is in a closed position. The inside of the hatch is flush with the inside of the surrounding wall when the hatch is in the closed position. This has the advantage of fish that is swimming around within the tank not becoming injured by objects or elements protruding from the otherwise smooth inside of the tank.

In one embodiment, the hatch casing may be provided with a recess which is complementary to the edge portion of the hatch. It is thereby achieved that the inside of the hatch is level with the wall.

The hatch casing may comprise a surrounding casing wall which may be provided with a first hinge on an inside. On its outside, the hatch may be provided with a second hinge. An articulated arm may be attached, in a first end portion, to the first hinge and be attached, in an opposite second end portion, to the second hinge. In a middle portion, the arm may be provided with a joint. This has the advantage of the hatch being moved inwards in the tank when the hatch is being opened. It also has the advantage of the water in the tank pressing against the hatch in the closed position, pressing the hatch against a sealing element in the recess. The hydrodynamic pressure on the inside of the hatch therefore cooperates with other hatch mechanisms to keep the hatch and hatch casing watertight.

The through hatch opening may be rectangular, or rectangular with rounded corners. In an alternative embodiment, the through hatch opening may be circular. A circular hatch opening has the advantage of the hatch opening being formable by core drilling in a tight wall. This is particularly advantageous because the hatch casing with the hatch may be retrofitted to an existing tank.

The tank may consist of cast concrete. In an alternative embodiment, the tank may consist of some other solid material, such as fibreglass, or a laminate.

In a second aspect, the invention relates to a method for providing access for personnel to a tank arranged to be filled with water, the method being characterized by comprising the steps of:
a) providing a tank as described above;
b) draining the tank of water until a water surface is at least below the lower edge of the hatch;
c) opening the hatch; and
d) entering the tank through the hatch opening.

It is advantageous for the water to be drained to below the lower edge of the hatch because the water will then no longer exert a hydrodynamic pressure against the inside of the hatch. The water will not flow out of the hatch opening, and the hatch will swing freely inwards in the tank above the water surface.

It is also advantageous that the invention facilitates the access to the inside of the tank in a construction period. This is before the tank is filled with water for the first time. It is also advantageous that the invention facilitates the evacuation of a staff member from the inside of the tank to the outside, especially if the staff member is injured. It is further advantageous that the invention makes it possible to drain harmful gases from the inside of the tank during the construction period and by maintenance work.

In what follows, an example of a preferred embodiment is described, which is visualized in the accompanying drawings, in which:

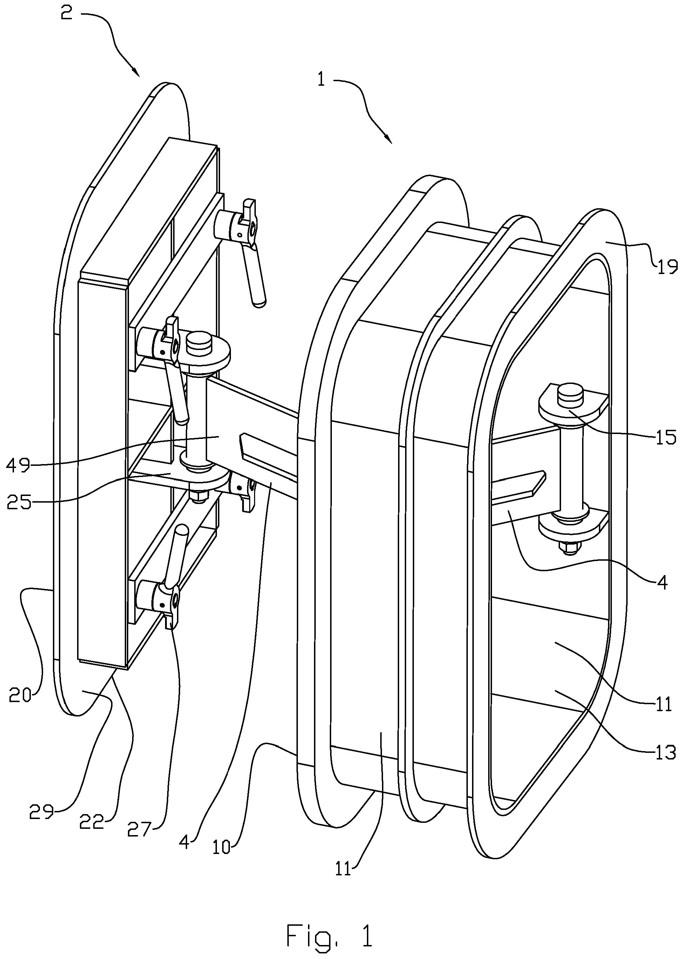

- Figure 1: shows a perspective view of a hatch casing provided with a hatch;
- Figure 2: shows on a smaller scale in accordance with the invention, a section through the hatch casing installed in a vessel wall, the hatch being in a closed position;
- Figure 3: shows the same as figure 2, but the hatch is in an open position;
- Figure 4: shows, on a different scale, a schematic side view of a tank according to the invention, the tank being provided with a hatch; and
- Figure 5: shows the same as figure 4 in another embodiment.

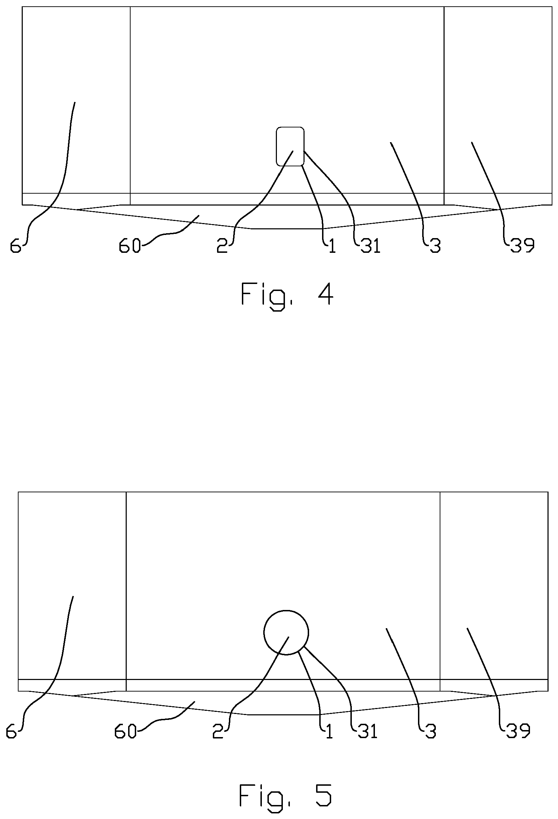

In the figures, the reference numeral 1 indicates a hatch casing. The hatch casing 1 is provided with a hatch 2. In accordance with the invention, the hatch casing 1 is installed in a wall 3. The wall 3 is arranged to surround a bottom 60 as shown in figures 4 and 5. Together, the wall 3 and bottom 60 form a tank 6 which can be filled with water (not shown). The water may be fresh water or sea water.

The wall 3 forms an inside 30, facing the water in the tank 6, and an outside 39. The wall 3 is provided with a through hatch opening 31. The hatch 2 forms an inside 20, facing the water in the tank 6, and an outside 29. The hatch casing 1 is provided with an inside flange 10 at the inside 30 of the wall 3 and an outside flange 19 at the outside 39 of the wall 3. The hatch casing 1 is positioned in the hatch opening 31.

The hatch casing 1 comprises a surrounding casing wall 11 which is provided with a first hinge 15 on an inside 13. On its outside 29, the hatch 2 is provided with a second hinge 25. An articulated arm 4 is attached, in a first end portion 40, to the first hinge 15 and attached, in an opposite second end portion 49, to the second hinge 25. In a middle portion 41, the arm 4 is provided with a joint 43.

The inside 13 of the hatch casing 1 is provided with a plurality of protruding locking faces 17. The outside 29 of the hatch 2 is provided with a plurality of locking handles 27.

The inside flange 10 of the hatch casing 11 is provided with a recess 18 which is complementary to the edge portion 28 of the hatch 2. The recess 18 is provided with a sealing element 5. The inside 20 of the hatch 2 is flush with the inside 30 of the wall 3 when the hatch 2 is positioned in the recess 18 and the locking handles 27 are in contact with the locking faces 17. The sealing element 5 seals in a liquid-tight manner between the outside 29 of the hatch 2 and the recess 18.

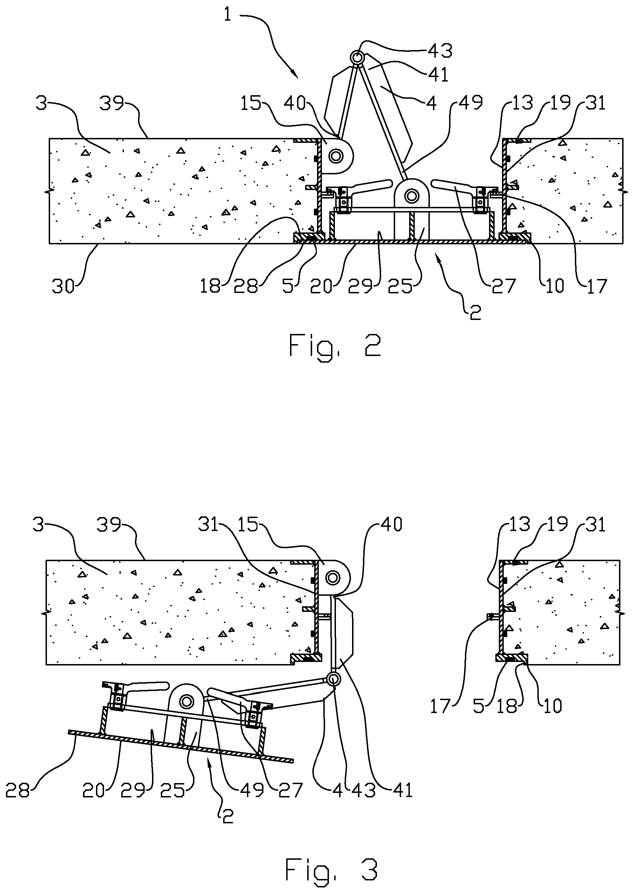

Figure 2 shows the hatch 2 in a closed position. The outside 29 of the hatch 2 is pressed against the sealing element 5 when the locking handles 27 are in contact with the locking faces 17. The locking handles 27 are provided with a slanted contact surface which cooperates with the locking faces 17 in a known manner. In the closed position, the inside 20 of the hatch 2 will be flush with the inside 30 of the wall 3. The tank 6 is filled with water and fish are released into the tank 6. The fish cannot possibly bump into any elements on the hatch 2 and therefore cannot become injured by the hatch 2. The water in the tank 6 exerts a hydrodynamic pressure against the hatch 2 so that the outside 29 of the hatch 2 is pressed further against the sealing element 5.

Figure 3 shows the hatch 2 in an open position. The hatch 2 cannot be opened until the water in the tank 6 has been drained away so that the water surface is at least below the lower edge 22 of the hatch 2 and the water no longer exerts a hydrodynamic pressure against the inside 20 of the hatch 2. The water will then not flow out the hatch opening 31, and the hatch 22 will swing freely inwards in the tank 6 above the water surface. All the water in the tank 6 may be drained away. The locking handles 27 are released from the locking faces 17 and the hatch can be swung inwards in the tank 6 as shown in figure 3. The arm 4 is articulated in such a way that the hatch 2 can be swung all the way to the side of the hatch casing 1. This simplifies the access for personnel to the inside of the tank 6 through the hatch casing 1 as the hatch 2 will not be in the way. The personnel may easily enter the tank 6 through the hatch casing 1 as the hatch casing 1 is positioned in the lower portion of the tank 6. In this way, maintenance work in the drained tank 6 may be performed without the tank 6 being entered from the top by means of a ladder (not shown) or other means, such as a flight of stairs within a scaffold (not shown).

After maintenance work has been carried out, the hatch 2 is brought into its closed position, and the tank 6 may be filled with water. Fish may be put into the water-filled tank 6.

In accordance with the invention, the work of completing the tank 6 in the construction period is simplified. Access to the inside of the tank 6 is through the hatch 2. Thereby, building a scaffold for a flight of stairs on the inside of the tank 6 is avoided. This also increases the safety for the personnel in that fall injuries and injuries by falling objects are avoidable. It is also easier and quicker to evacuate the staff from the tank 6 through the hatch 2. In its open position, the hatch 2 will ventilate the tank 6, so that harmful gases cannot accumulate on the inside of the tank 6 during the construction period.

Figure 4 shows a tank with an octagonal wall 3. The hatch casing 1 and the hatch 2 are shown in a rectangular shape and with rounded corners. Figure 5 shows an alternative design. The hatch casing 1 and the hatch 2 are of a circular shape. This has the advantage of allowing the wall 3 to be cast without an opening, and of allowing the hatch opening 31 to be formed by core drilling after casting. This also has the advantage of the hatch 2 being retrofittable to existing tanks 6.

The tank 6 may consist of cast concrete. In an alternative embodiment, the tank 6 may consist of another solid material, such as fibreglass, or a laminate.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. A tank (6) for rearing fish, said tank (6) having a bottom (60) and a surrounding wall (3) with an inside (30) and an outside (39), provided with a hatch casing (1) positioned in a hatch opening (31) extending through the surrounding wall (3) for access by personnel from the outside to the inside of the tank (6), and the hatch casing (1) is provided with a hatch (2) with an inside (20) facing the water in the tank (6), and an outside (29), the hatch (2) in a closed position closing the hatch opening (31) in a liquid-tight manner, and the inside (20) of the hatch (2) being flush with the inside (30) of the surrounding wall (3) when the hatch (2) is in the closed position, **characterized in that** the hatch opening (31) is provided in a lower portion of the surrounding wall (3).

2. The tank (6) according to claim 1, wherein the hatch casing (1) is provided with a recess (18) which is complementary to the edge portion (28) of the hatch (2).

3. A method for providing access for personnel to a tank (6) arranged to be filled with water for rearing fish, **characterized in that** the method comprises the steps of:
a) providing a tank (6) according to claim 1;
b) draining the tank (6) of water until a water surface is at least below the lower edge (22) of the hatch (2);
c) opening the hatch (2); and
d) entering the tank (6) through the hatch opening (31).

## Patentansprüche

1. Tank (6) zur Fischzucht, wobei der Tank (6) einen Boden (60) und eine umgebende Wand (3) mit einer Innenseite (30) und einer Außenseite (39) aufweist, bereitgestellt mit einem Lukengehäuse (1), das in einer Lukenöffnung (31) positioniert ist, die sich durch die umgebende Wand (3) erstreckt, um dem Personal den Zugang von außen zum Inneren des Tanks (6) zu ermöglichen, und wobei das Lukengehäuse (1) mit einer Luke (2) bereitgestellt ist, die eine dem Wasser im Tank (6) zugewandte Innenseite (20) und eine Außenseite (29) aufweist, wobei die Luke (2) in einer geschlossenen Position die Lukenöffnung (31) flüssigkeitsdicht verschließt, und wobei die Innenseite (20) der Luke (2) bündig mit der Innenseite (30) der umgebenden Wand (3) ist, wenn sich die Luke (2) in der geschlossenen Position befindet, **dadurch gekennzeichnet, dass** die Lukenöffnung (31) in einem unteren Abschnitt der umgebenden Wand (3) bereitgestellt ist.

2. Tank (6) nach Anspruch 1, wobei das Lukengehäuse (1) mit einer Aussparung (18) bereitgestellt ist, die komplementär zum Randabschnitt (28) der Luke (2) ist.

3. Verfahren zum Bereitstellen von Zugang für Personal zu einem Tank (6), das so angeordnet ist, dass es mit Wasser zur Fischzucht gefüllt werden kann, **dadurch gekennzeichnet, dass** das Verfahren die folgenden Schritte umfasst:
a) Bereitstellen eines Tanks (6) nach Anspruch 1;
b) Entleeren des Wassers aus dem Tank (6), bis eine Wasseroberfläche mindestens unterhalb des unteren Randes (22) der Luke (2) liegt;
c) Öffnen der Luke (2); und
d) Betreten des Tanks (6) durch die Lukenöffnung (31).

## Revendications

1. Réservoir (6) pour l'élevage de poissons, ledit réservoir (6) présentant un fond (60) et une paroi environnante (3) avec un intérieur (30) et un extérieur (39), doté d'un corps (1) de trappe positionné dans une ouverture (31) de trappe s'étendant à travers la paroi environnante (3) pour l'accès du personnel de l'extérieur vers l'intérieur du réservoir (6), et le corps (1) de trappe est doté d'une trappe (2) avec un intérieur (20) orienté vers l'eau dans le réservoir (6), et un extérieur (29), la trappe (2) dans une position fermée fermant l'ouverture (31) de trappe de manière étanche aux liquides, et l'intérieur (20) de la trappe (2) affleurant l'intérieur (30) de la paroi environnante (3) lorsque la trappe (2) est en position fermée, **caractérisé en ce que** l'ouverture (31) de trappe est prévue dans une partie inférieure de la paroi environnante (3).

2. Réservoir (6) selon la revendication 1, dans lequel le corps (1) de trappe est doté d'un évidement (18) qui est complémentaire à la partie (28) de bord de la trappe (2).

3. Procédé pour fournir au personnel un accès à un réservoir (6) conçu pour être rempli d'eau pour l'élevage de poissons, **caractérisé en ce que** le procédé comprend les étapes suivantes :
a) la fourniture d'un réservoir (6) selon la revendication 1 ;
b) la vidange du réservoir (6) d'eau jusqu'à ce qu'une surface d'eau est au moins en dessous du bord inférieur (22) de la trappe (2) ;
c) l'ouverture de la trappe (2) ; et
d) la pénétration dans le réservoir (6) par l'ouverture (31) de trappe.
